# EUROPEAN PATENT APPLICATION

(11) **EP 1 921 560 A1**
(43) Date of publication of application: **14.05.2008**
(21) Application number: 06023460.6
(22) Date of filing: 10.11.2006
(51) Int. Cl.: G06F 21/24

(54) **Method and system for providing sensitive data**

(71) Applicant: Nokia Siemens Networks GmbH & Co. KG, 81541 München (DE)
(72) Inventor: Abendroth, Jörg, 81737 München (DE); Cuellar, Jorge, Dr., 82065 Baierbrunn (DE); Khurat, Assadarat, 81543 München (DE)

(57) **Abstract**

A method for providing sensitive data comprising the followings steps: receiving (S1) a request for the sensitive data which comprises at least one request attribute and indicates a recipient, performing (S2) a first check whether the received request is admissible by means of a first set of predetermined rules, performing (S3) at least one further independent fail safe check whether the received request is admissible by means of a protected second set of predetermined rules, and providing (S4) the requested sensitive data to the recipient if all checks indicate that the request is admissible.

## Description

The invention provides a method and a fail safe system for providing sensitive data to a recipient.

Data privacy has become an important issue due to increasing availability of sensitive data on-line such as in health, financial and genetic information area. To provide privacy and security in a system nowadays, policies have been used. However, when deployed in a real scenario, many different possible sources of system failures such as software malfunction, human error, contradiction of internal policies with the legislation, etc. are likely to occur. This can result in a privacy breach. The invention provides a privacy policy fail safe apparatus, which is based on the fail safe concept. This apparatus uses simple policies (usually negative policies that are prohibitions) to add protection to the outgoing sensitive data.

With the improvement of information and communication systems technology, the availability of on-line data has hugely increased. Not only can everyone easily access available public information, but also sensitive data that only authorized entities are allowed to access. An important point is the level of trust that is being placed on such systems. Especially, people expect that sensitive data is well protected by e.g. a secure channel, wherein the access to data is well controlled and that the system reacts properly to failures. These are some of the design goals of a secure system. To provide security in a system, policies have been employed e.g. in access control systems. With sensitive data such as health information, criminal justice, financial information and genetic information areas, etc., privacy is one of the important and key aspects to be considered.

When a secure system is deployed in a real world scenario, it is common that the policies become quite numerous and complicated. It is thus hard to manage such a huge set of policies in a consistent way and consequently failures are likely to occur. In addition, software flaws and human errors (e.g. when there is human interaction to accomplish the service) are typical causes of failures. These problems may cause conflict against the privacy law which the secure system, hence, should be able to handle in a secure manner. Moreover, nowadays many means of communication have emerged such as e-mail, SMS, MMS, etc. This means that a wide variety of channel types is available and can be used to transmit the content. For instance, a request may be received over one type of channel (SMS) while the response is sent over a different type of channel. Since these problems are hard to manage due to the large set of possible and unpredictable error causes, proper reaction against system failures must be taken. The general concept of a fail safe system has been introduced in several fields such as integrated circuits, railway applications, distributed computing, airplane navigation systems, ATMs machine, etc. Its general idea is to limit the consequences of system or device failures so that failures occur in a harmless or in the least harmful way.

In a policy-based system, policy is used to designate the procedure or process of an organization. It can be represented as "If A then B" where A is a condition that if it is true, then the action B is performed. An important part of a policy-based system is called the policy enforcing engine. It is employed for enforcing policies to perform the action under specified conditions. Two main entities of the policy enforcing engine are the policy enforcement point (PEP) and the policy decision point (PDP). The PEP provides all relevant attributes to the PDP in order for the PDP to decide. To be able to make a decision, the PDP analyses the attributes with the appropriate policies obtained from a policy repository. The architecture of a conventional policy-based service system according to the state of the art will be described in more detail in the subsequent section.

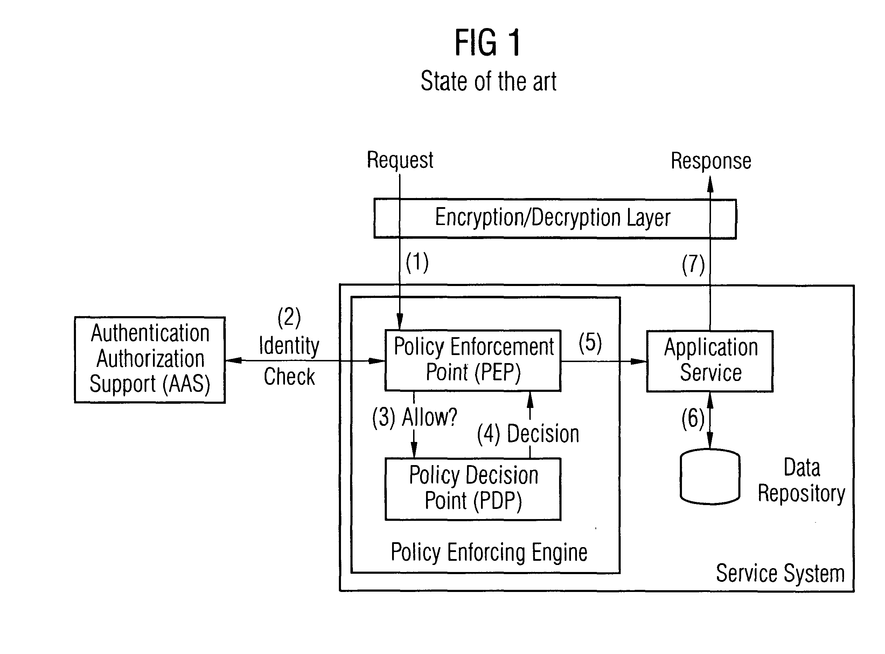

Figure 1 shows the architecture of a conventional policy-based system. The encryption/decryption layer and the authentication authorization support (AAS) are highly trustable entities. To establish secure communication, secure channel techniques such as IPSec and TLS/SSL or WS-Security may be deployed. Some parts or even the entire message that comes in and out of the system must be encrypted and decrypted. The encryption/decryption layer is an entity supporting this secure communication. The authentication authorization support e.g., identity provider (IdP), is an entity which helps in checking whether the client issuing the request is really the one who he claims to be. When a client wants to obtain a data in a service system, it sends a request message to the service. The following actions then take place:
1. The identity and privilege of the requester are verified at the policy enforcing engine.
2. The PEP checks the client's identity by querying the authentication authorization support (AAS).
3. Once the request is authenticated, the PEP asks the PDP to determine whether the client has appropriate permissions to execute the request. This can be done by extracting necessary attributes from the request and sending them to the PDP.
4. The PDP makes a decision whether the access should be granted or not. This is typically done by matching the obtained attributes with the appropriate policies. The PDP's decision is sent back to the PEP.
5. The PEP enforces the policy by sending the message to the application service.
6. If the PDP's decision is "permit", the application service retrieves the requested data from the data repository.
7. Finally the application service creates a response with data attached and sends it to the client.

In a conventional policy-based system according to the state of the art as shown in figure 1, there can be many means causing privacy failures such as policy contradiction, human error, software malfunction, etc. For instance, when an organization grows, the policies become more and more complicated and can be changed over time. This can easily result in policy contradictions and, therefore, wrong decisions are more probable to occur such as the PDP allowing an unauthorized client to obtain the requested data. Besides that, when there is human interaction involved to accomplish the service, man-made errors are highly probable to occur arising from such things as misunderstanding, incaution and unawareness. For example, when there is a request for data by phone, a secretary may send data to the wrong recipient or even send the wrong data if he or she mishears the conversation. With software flaws, the potential for a system malfunction is raised e.g. when the restricted content of data is revealed or the response message is sent to the wrong destination. Especially in the multi-channel communication, the request and response messages are transmitted in the different channel types. For example, a client requests his medical record via a website and requests it to be sent to his mobile phone. It is necessary to be assured that the data is sent via the right secure channel.

Accordingly, it is an object of the present invention to provide a method for providing sensitive data and a fail safe system which protects sensitive data for critical cases to be in a safe state.

This object is achieved by a method having the features of main claim 1.

The invention provides a method for providing sensitive data comprising the following steps:
- receiving a request for the sensitive data which comprises at least one request attribute and indicates a recipient;
- performing a first check whether the received request is admissible by means of a first set of predetermined rules;
- performing at least one further independent fail safe check whether the received request is admissible by means of a protected second set of predetermined rules; and
- providing the requested sensitive data to the recipient if all checks indicate that the request is admissible.

In one embodiment of the method according to the present invention, the requested attributes comprise a requester ID, a recipient ID, a data channel ID, a public key of the recipient, a data content ID, and allowable data transactions.

In one embodiment of the method according to the present invention, the protected second set of predetermined rules is protected against changes of the first set of rules.

In one embodiment of the method according to the present invention, the first check is performed by a policy decision point (PDP) of a policy enforcing engine.

In one embodiment of the method according to the present invention, the requested sensitive data is provided in a response message to a first safe policy enforcement point (PEP) of a privacy policy fail safe (PPFS) apparatus after a successful first check.

In one embodiment of the method according to the present invention, the second check is performed by a fail safe policy decision point (fail safe PDP) unit.

In one embodiment of the method according to the present invention, the first set of predetermined rules is stored in a first rule repository.

In one embodiment of the method according to the present invention, the second set of predetermined rules is stored in a fail safe policy access point (PAP) unit of the PPFS apparatus.

In one embodiment of the method according to the present invention, the fail safe check is performed by verifying the response message received by said PEP unit of the PPFS apparatus on the basis of several predetermined criteria.

In one embodiment of the method according to the present invention, the criteria comprise permit recipient data, channel information data and data content.

In one embodiment of the method according to the present invention, an error report is generated when the fail safe check is performed unsuccessfully.

In one embodiment of the method according to the present invention, obligations are transmitted to the recipient along with the sensitive data if the fail safe check is performed successfully.

The invention further provides a fail safe system comprising:
- means for receiving a message containing sensitive data when a first check whether a request for said sensitive data is admissible has been performed successfully by means of a first set of predetermined rules;
- a fail safe policy enforcement point (PEP) unit for extracting request attributes of said request;
- a fail safe policy decision point (PDP) unit for performing an independent fail safe check whether the received request is admissible by means of a protected second set of predetermined rules stored in a fail safe policy access point (PAP) repository on the basis of the extracted request attributes;
- wherein the fail safe policy enforcement point (PEP) unit forwards said message to a recipient indicated in said request if the fail safe check is performed successfully by said fail safe policy decision point (PDP) unit.

In a preferred embodiment of the fail safe system according to the present invention, the PEP unit forwards the extracted attributes together with the second set of rules when the two sets of rules do not comply with each other to generate an error report.

In the following, preferred embodiments of the method for providing sensitive data and the fail system according to the present invention are described with reference to the enclosed figures.
- Figure 1: shows a policy-based service system according to the state of the art;
- figure 2: shows a policy-based system comprising a privacy policy fail safe apparatus according to one embodiment of the present invention;
- figure 3: shows a block diagram of a privacy policy fail safe (PDFS) apparatus according to one embodiment of the present invention;
- figure 4: shows a flowchart of a possible embodiment of the method for providing sensitive data according to the present invention;
- figure 5: shows a further flowchart for illustrating a possible embodiment of the fail safe check according to the present invention;
- figure 6: shows a scenario of an electronic health report (EHR) service in which the fail safe system according to the present invention is integrated;
- figure 7: illustrates a further example for the method for providing sensitive data according to the present invention.

System errors can affect the outgoing message and result in a privacy breach. These errors are generally hard to manage due to the large number of possible and unpredictable error causes. The outgoing message is checked by the method according to the present invention to protect sensitive data for the critical cases to be in a safe state. Since there might be errors e.g. at the application service which might result in forwarding the data to the wrong recipient and vice versa or sending the data through the wrong channel or even sending the restricted data in clear text. Therefore, one cannot be sure that the outgoing message is exactly the one one wants it to be. Thus, checking message at the system outbound provides more privacy and protection. In transferring the data, typical privacy issues of concern include whether the proper data is sent securely to the correct recipient.

Therefore three criteria are specified in one embodiment to check in critical cases for message verification to limit the consequences of errors as shown below:

### 1. Permit recipient:

For the outgoing message it is checked whether the recipient has sufficient privileges to obtain the data attached in it. This criterion provides a certain degree of protection whereby though the recipient's name might be wrong, at least the data is sent to the one who has permission to acquire it. Even in the case that wrong data may be sent, this scheme can protect the privacy in the same way.

### 2. Channel information:

For the outgoing message it is checked whether it is sent via a correct secure channel by comparing its channel information with the one in the channel information repository. This criterion guarantees that the response message is sent to the recipient over the correct secure channel. After passing the application service, though permit recipient checking block can assure the correctness of rights of the receiver, one cannot be sure that the channel of the response message is the correct one. Therefore, the channel information must be verified before sending out the response.

### 3. Data content:

This criterion assures that the data content complies with the privacy law. Since the identifiable data is highly related to privacy, this is the typical issue to be checked.

With these three criteria, one can be sure that even when policy contradiction, software malfunction and human error occur, the outgoing message is at least sent to a permitted client via the right secure channel with the data content that conforms to the privacy law.

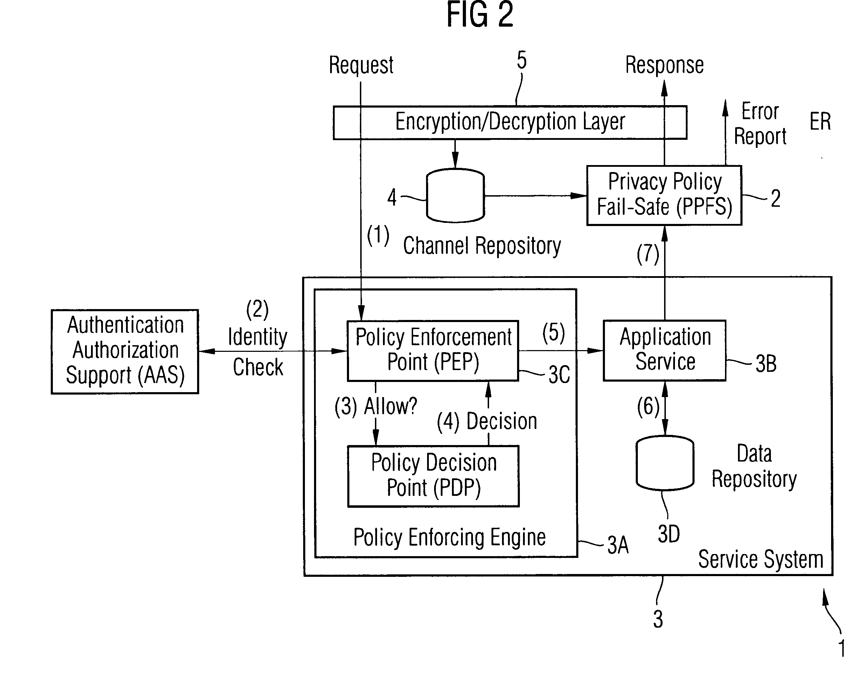

An enhanced policy-based system 1 comprising a fail safe system 2 according to the present invention is shown in Figure 2 and a service system 3. The policy-based system 1 includes a privacy policy fail safe unit 2 (PPFS) and a channel information repository 4. For the PPFS unit 2, the concept of fail safe is applied, whereby the outbound message is verified according to the PPFS privacy rules r and appropriate actions are taken such that any prohibited situation will never happen. The PPFS unit 2 is also based on policies, but these are much simpler and easy to manage compared to the ones employed in a policy enforcing engine 3A of the service system 3. The verification occurs in one embodiment only for unacceptable situations, which results in simpler policies. When any conflict is detected, the PPFS unit 2 creates an error report ER and sends it to the administrator.

In one embodiment, channel information that is used to avoid errors in sending out the data to the wrong channel. Such problems are likely to happen when the requester wants to receive data through different communication channels. The channel information repository 4 stores channel related information and in particular of the other end-point of the channel. These will be checked by the PPFS unit when there is an outgoing message with data contained coming out from the application service 3B of the service system 3. The channel related information is collected from the encryption/decryption layer 5. These two entities will be described in detail in the following subsections. Note that only the case of outgoing messages with privacy related data is considered.

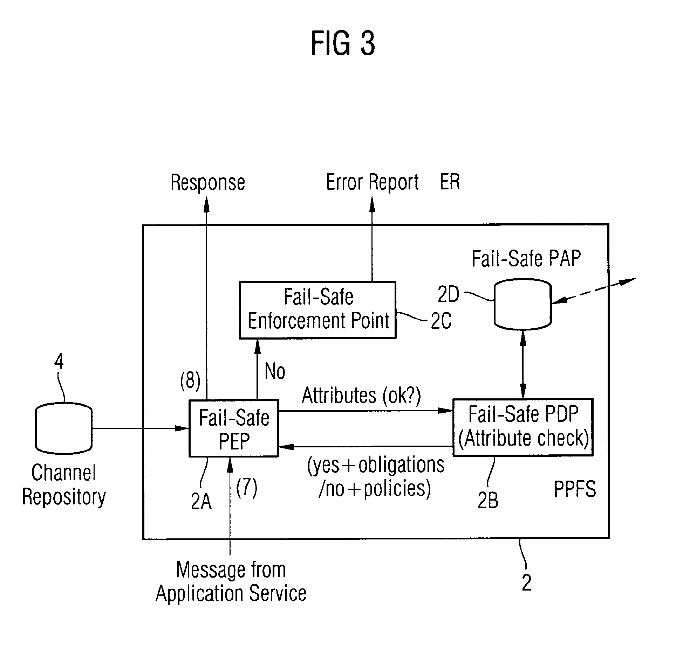

Figure 3 shows the components inside the PPFS unit 2. It consists of four entities which are fail safe policy enforcement point 2A (fail safe PEP), fail safe policy decision point (fail safe PDP) 2B, fail safe enforcement point 2C and fail safe policy access point 2D (fail safe PAP). The fail safe PEP 2A handles the verification of the response from the application service 3B. When there is data contained in the response message, it extracts necessary attribute values and delivers them to the fail safe PDP 2B. After receiving the result, it either sends the related attributes together with the policies which do not comply with each other to the fail safe enforcement point 2C or forwards the response message with optional obligations to the client.

The fail safe PDP 2B decides the result either "yes" or "no" using attributes from the fail-safe PEP 2A and policies from the fail safe PAP 2D. The fail safe PAP 2D is a repository containing all policies such as legislations which cannot be overwritten and privacy related obligations which can be partly defined by the authorized users as shown by the dashed line in figure 3. The fail safe enforcement point 2C creates an error report ER which will be sent to the administrator when it receives information from the fail safe PEP 2A.

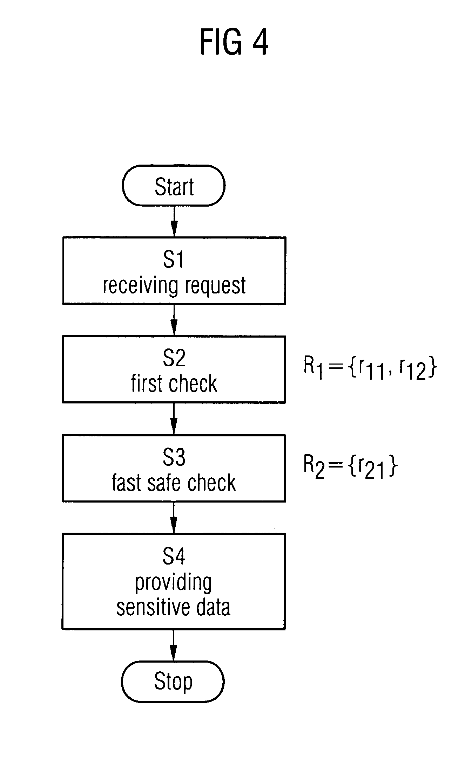

Figure 4 shows a flowchart of a possible embodiment for providing sensitive data according to the present invention.

In a step S1, a request for sensitive data which comprises at least one request attribute and which indicates a recipient is received by the fail safe system according to the present invention.

In a further step S2, a first check whether the received request is admissible is performed by means of a first set R₁ of predetermined rules, e. g. two rules r₁₁, r₁₂.

In a further step S3, at least one further independent fail safe check is performed whether the received request is admissible by means of a protected second set R₂ of predetermined rules, e. g. rule r₂₁.

In a further step S4, the requested sensitive data is provided to the recipient only if both checks indicate that the request is admissible. The request attributes of a request comprise different kinds of attributes, such as a requester ID, a recipient ID, a data channel ID, a public key of the recipient, a data content ID or allowable data transactions, such as read or write.

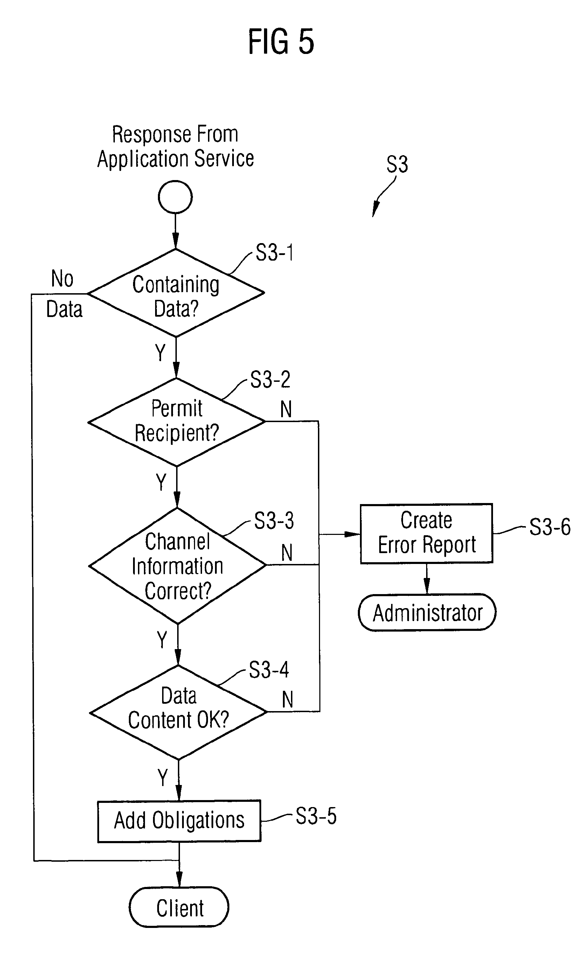

Figure 5 shows a flowchart of the PPFS check according to one embodiment of the present invention. Once there is a response message from the application service 3B, the fail safe PEP 2A checks in step S3-1 the message whether there is data attached. If there is no data, it forwards the response message to the client. Messages without data are not filtered since they have no severe effect on the privacy issue. If there is data contained, the fail safe PEP 2A extracts necessary attributes from the message and sends it to the fail safe PDP 2B to verify. The fail safe PDP 2B queries appropriate policies from the fail safe PAP 2D to use for his decision. If the decision from the fail safe PDP 2B is "yes" for the recipient permission, channel information and restricted data content check which are performed sequentially in steps S3-2, S3-3, S3-4 the privacy related obligations may be attached with the response message in step S3-5 before sending out to the client. If the answer is "no", which means that either the recipient has no right to obtain the data, channel information mismatches or identifiable data content is not protected, the fail safe PEP 2A safeguards the data by not transferring the response message to the client. Instead it sends the related attributes together with the policies which do not conform to each other to the fail safe enforcement point 2C. The fail safe enforcement point 2C utilizes this information to create an error report ER and sends it to the administrator in step S3-6.

The channel information is a logical (or virtual) set of data that contains records about the different communication channels that can be used to contact external communication partners (end-points) securely. A channel may be as abstract as a public key, belonging to a known communication partner or as concrete as an existing IPsec security association or TLS connection. Each logical channel record is indexed by a unique channel index (ch_idx), and corresponds to an authenticated identity (end-point) and contains further information about the channel type, the addressing information of that channel (IPaddress, Port, etc.) depending on the type of channel. The channel information may be seen as a dictionary, that may be used either to decide which channel to use to contact a given communication partner, to decide who has sent a given message or to decide to whom a given channel will deliver information. The channel index field identifies the channel that the end-user employs to contact the service. In one implementation, it may depend on the communication means such as TLS, IPSec and WS-Security. For these cases, their channel indexes can be session ID, security parameter index and public key respectively. The end-point indicates the username (could be an authenticated pseudonym) of the client. The channel type field indicates the channel type and/or address of which the message is transmitted. An example of channel information is shown in table 1. From this table, Bob established a wireless connection using his private key to secure the data while Alice established an e-mail connection using a private key to secure the content. The channel information is updated each time that a new logical channel is being constructed, updated or deleted. This happens when a new key agreement is run (like IKE or TLS-handshake) or when keys are being enrolled with the server.

To provide more privacy, the PPFS according to the present invention introduces sticky policies appended to the response message, which are to be understood as obligations by the recipient. The policies can be classified into two types according to secure level of data type. A first level is provided for data containing highly sensitive information. In this class, one does not allow a client to manage since it contains very sensitive data. The second level is provided for data that contains less sensitive information. The client can choose the obligations in level 2 policies. An example of obligations of both classes is shown below:
Obligation level 1:
   • This data must not be distributed.
   • This data must be encrypted when storing.
   • This data must be deleted within 10 days.
Obligation level 2:
   • This data can be used for academic purpose after removing identifiable information.
   • This data must be digitally signed before distribution.
   • This data may be distributed but only according to policy at URI...
   • This data can be distributed after notifying the owner.

Since the fail safe PEP 2A examines the message step by step i.e., permit recipient, channel information and data content as shown in figure 5, it is thus able to show in a certain degree where an error has occurred which helps in fault analyzing and error correction. An example of the structure of the error report ER in the XML schema is shown in the subsequent section. Each report ER denotes a policy and attributes which are not compliant with each other.

```
 <?xml version="1.0" encoding="utf-8"?>
 <xs:schema
 xmlns:xs="http://www.w3.org/2001/XMLSchema">
 <xs:element name="policy" type="xs:string"/>
 <xs:element name="end_point" type="xs:string"/>
 <xs:element name="channel_index"
 type="xs:string"/>
 <xs:element name="channel_type"
 type="xs:string"/>
 <xs:element name="recipient" type="xs:string"/>
 <xs:element name="identifiable_item"
 type="xs:string"/>
 <xs:element name="data_name" type="xs:string"/>
 <xs:element
 name="time_stamp"type="xs:dateTime""/>
 <xs:element name="permit-recipient">
 <xs:complexType>
 <xs:sequence>
 <xs:element ref="policy"/>
 <xs:element ref="recipient"/>
 <xs:element ref="data_name"/>
 <xs:element ref="time_stamp"/>
 </xs:sequence>
 </xs:complexType>
 </xs:element>
 <xs:element name="channel_information">
 <xs:complexType>
 <xs:sequence>
 <xs:element ref="policy"/>
 <xs:element ref="channel_index"/>
 <xs:element ref="end_point"/>
 <xs:element ref="channel_type"/>
 <xs:element ref="time_stamp"/>
 </xs:sequence>
 </xs:complexType>
 </xs:element>
 <xs:element name="data-content">
 <xs:complexType>
 <xs:sequence>
 <xs:element ref="policy"/>
 <xs:element ref="identifiable_item"
 minOccurs="1" maxOccurs="unbounded"/>
 <xs:element ref="data_name"/>
 <xs:element ref="time_stamp"/>
 </xs:sequence>
 </xs:complexType>
 </xs:element>
 <xs:element name="error">
 <xs:complexType>
 <xs:choice>
 <xs:element ref="permit-recipient"/>
 <xs:element ref="channelinformation"/>
 <xs:element ref="data-content"/>
 </xs:choice>
 </xs:complexType>
 </xs:element>
 </xs:schema>
```

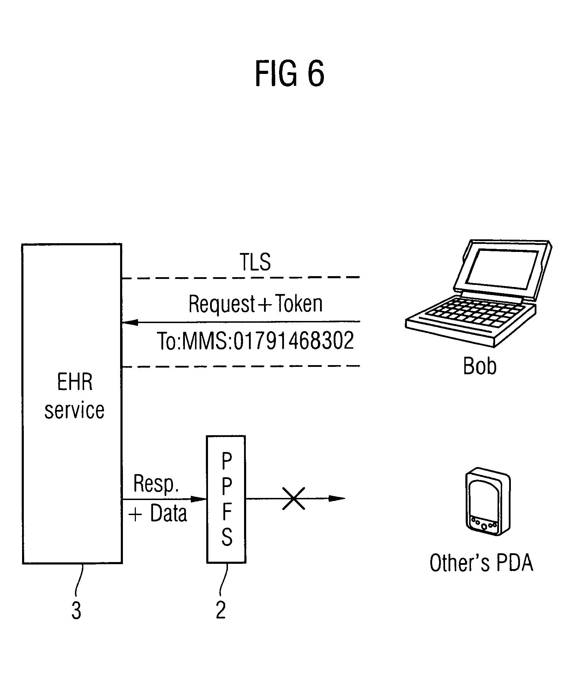

Figure 6 shows an example of an electronic health record (EHR) service in which the PPFS system 2 according to the present invention is integrated. The EHR service 3 is a service that provides the medical record of clients who register with it. The medical record is divided into several categories such as profile, medication and laboratory test. The clients can choose part of the data to conceal which only allowed clients can see it. After registration, each client obtains a username and a Token which is used to identify himself during the authentication process. In this scenario, Bob requests his medical record via EHR service website using TLS and would like to receive the data on his PDA (MMS:01791468302). Since sending data via MMS is not secure, the EHR service uses Bob's public key to encrypt the data before sending. However due to a software failure, the wrong public key is selected during the EHR service process. For the EHR service without PPFS, this error cannot be realized. The result is that the owner of the private key corresponding to this public key can read the data. With the add-on PPFS unit 2, this problem is detected and the response message with data contained is prevented as shown in Figure 6. Additionally, an error report ER is created and is sent to the administrator which will help backtracking the problem.

When Bob wants to get his medical record, he establishes a TLS connection wherein the channel information of this connection is stored in the channel information repository 4 as shown in the second row of table 1.

**Table 1: Channel Information**

| Channel Index | End-point | Channel type |
|---|---|---|
| Public Key | Bob | MMS:0179-1468302 |
| SessionID | Bob | TLS:Socket |
| Public Key | Alice | Email:Alice@yy.com |

When the response message is sent from the application service 3B, the following checking sequences take place:
1. The PPFS 2 verifies the message with its policies which can be described into four steps. Note that for the other cases which are not specified in the policies, one assumes the answer to be "yes". Each step is performed in sequence by checking with policies as follows:
   • First, policy for permit recipient check.
      permission(recipient, data_category) = false
      → answer = no
   • Second, policy for channel information check.
      end-point(ch_idx(response)) ≠ recipient
      → answer = no
   • Third, policy for data content check.
      item(data)Îidentifiable_item_list
      → answer = no
   • Finally, which requirement will be attached in the response message is governed by obligation policies. The first policy is for data with concealed item while the other is for data without concealed item.
      item(data)Îconcealed_item_list(data)
      → attach(obg_levell)
      item(data)Ïconceaied_item_list(data)
      → attach(obg_level2)
2. When the wrong secure response channel is detected, an error report ER showing that a mistake was discovered at channel information checking block, is created. This error report ER denotes that the response message corresponding to Bob's request contains wrong channel information after checking with a policy stating in the report. This assists in narrowing down the target domain for the administrator to find and correct the error.

```
 <error>
 <channel information>
 <policy>...</policy>
 <channel_index>public_key</channel_index>
 <end_point>Bob</end_point>
 <channel_type>MMS:01791468302</channel_type>
 <time_stamp>2006-08-14T17:34:00</time_stamp>
 </channel_information>
 </error>
```

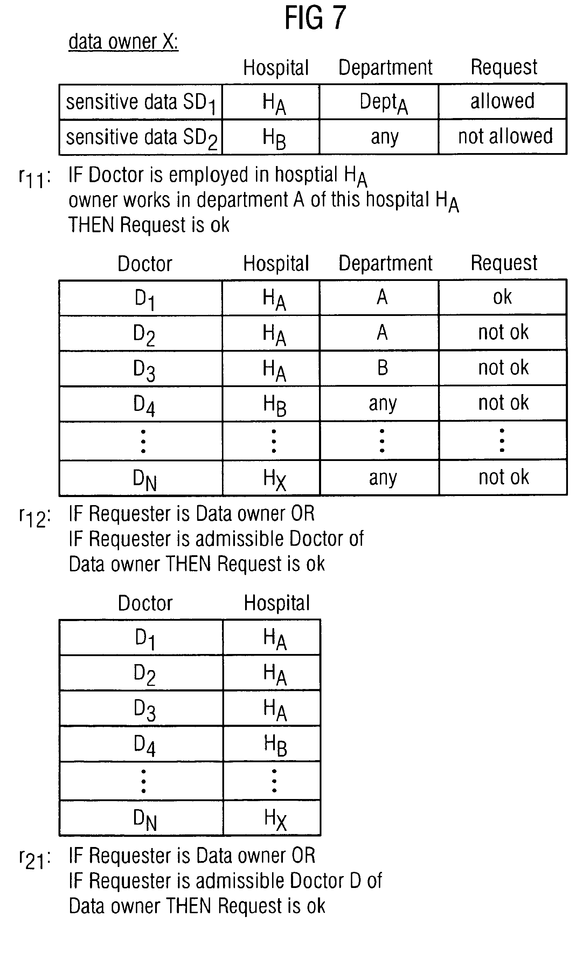

Figure 7 illustrates a further example for the fail safe system 2 according to the present invention. A data owner of a medical data record may not allow that his medical data are accessed by doctors of another hospital H_{B}, whereas his personal medical record may be seen by doctors of his hospital H_{A} which work in the department A of said hospital H_{A}. Any doctor working in the other hospital H_{B} may not see his medical data. Accordingly, a first rule r₁₁ for accessing data stored for the data owner, i. e. patient, is:
"If the doctor is a doctor of the hospital H_{A} and is employed in the department A of the hospital H_{A}, THEN the request is admissible."

A further rule r₁₂ of such a predetermined first set R₁ of rules is:
"IF the requester is the data owner or IF the requester is an admissible doctor of said data owner, then the request for the sensitive data is allowable."

In a data base several doctors are stored working in the hospital H_{A} and working in the department A of this hospital H_{A}. Other doctors are stored as well which work in other hospitals or in other departments of the hospital H_{A}. When the system receives a request from the data owner or from one of the doctors stored in the list who fulfils the rule, then after a first check, the request for the sensitive data is allowed.

However, because these rules r might change over time, or when the doctors leave or enter a hospital, the rules might become contradictive so that it may happen that persons not entitled to the sensitive data will receive this data. With the method according to the present invention, it is assured that sensitive personal data is not transmitted to unauthorized persons. The system according to the present invention enhances confidentiality of the system.

This is achieved by the second independent fail safe check in step S3 as shown in figure 5. For example, a further rule r₂₁ might be employed allowing to send the sensitive data only if the doctor to which the sensitive data is sent works indeed in hospital H_{A}. Normally, the rules for the second fail safe check are easier and less complex than the rules for the first check. The second set R₂ of predetermined rules is protected against changes of rules of the first set R₁ employed for the first check. For instance, the rules for the first check may be changed by administrative staff of the hospital, whereas the rules for the second fail safe check can only be changed by a separate organization, such as a security organization monitoring the provision of personal sensitive data to third parties.

Due to many possible causes of system failures that are in general hard to manage and to predict, the invention provides a privacy policy fail safe unit 2 to check any outgoing message in critical cases. Since there might be errors e.g. at the application service 3B one cannot be sure that the outgoing data is exactly the wanted data. Therefore checking the outgoing message can provide more privacy and protection. Moreover, it might seem that the scheme according to the invention provides the same effect as having hierarchical policies at the policy enforcing engine. However, the error can occur later (e.g., at the application service) making it impossible for the policy enforcing engine to handle. To verify the outgoing message, the PPFS 2 uses prohibition policies which are much simpler than the ones in the policy enforcing engine 3A in several aspects. First, since the PPFS unit 2 aims to check forbidden cases, only some related constraints, some important attributes and critical situations are concerned which obviously indicates less sophisticated constraints. Second, the PPFS's policies are not altered which results in more consistency. Though some parts of the sticky policies can be changed by authorized clients, it is not a burden because it has nothing to do with the message verification. It is just additional information to be attached in the outgoing message. Finally, the PPFS's policies do not include the policies related in identity proving since it is not necessary for it. The PPFS unit 2 verifies messages with three criteria i.e., the permission of recipient to obtain the data, the correct secure channel information and data content conformed to the privacy legislation. With these three criteria, one can be sure that even if policy contradiction, software malfunction, human error, etc., occur, the outgoing message is at least sent to a permitted client via the right secure channel with the data content that conforms to the privacy law.

As the service system controls every device in the system (where errors may occur), the PPFS is designed to be independent (add-on). Consequently, the PPFS unit 2 can fully perform message verification without interference from the service system 3. However, to be able to verify the permission of the recipient, though the policies are not changed directly, the information is shared with the application service 3B. Once an error is detected, an error report ER is created and is sent to the administrator. Besides adding security by extra checking of the response message, the PPFS unit 2 also enhances more privacy by introducing obligations (sticky policy) to be attached with the outgoing message.

## Claims

1. A method for providing sensitive data comprising the followings steps:
(a) receiving (S1) a request for the sensitive data which comprises at least one request attribute and indicates a recipient;
(b) performing (S2) a first check whether the received request is admissible by means of a first set of predetermined rules;
(c) performing (S3) at least one further independent fail safe check whether the received request is admissible by means of a protected second set of predetermined rules; and
(d) providing (S4) the requested sensitive data to the recipient if all checks indicate that the request is admissible.

2. The method according to claim 1,
wherein the request attributes comprise
a requester ID,
a recipient ID,
a data channel ID,
a public key of the recipient,
a data content ID, and
allowable data transactions.

3. The method according to claim 1,
wherein the protected second set of predetermined rules is protected against changes of the first set of rules.

4. The method according to claim 1,
wherein the first check is performed by a policy decision point (PDP) of a policy enforcing engine.

5. The method according to claim 1,
wherein the requested sensitive data is provided after a successful first check in a response message to a fail safe policy enforcement point (PEP) of a privacy policy fail safe apparatus (PPFS).

6. The method according to claim 1,
wherein the second check is performed by a fail safe policy decision point (fail safe PDP) of a private policy fail safe apparatus (PPFS).

7. The method according to claim 1,
wherein the first set of predetermined rules is stored in a first rule repository of a service system.

8. The method according to claim 1,
wherein the second set of predetermined rules is stored in a fail safe policy access point (PAP) of the privacy policy fail safe apparatus (PPFS).

9. The method according to claim 5,
wherein the fail safe check is performed by verifying the response message received by said fail safe policy enforcement point (PEP) of the privacy policy fail safe (PPFS) apparatus on the basis of several predetermined criteria.

10. The method according to claim 1,
wherein the criteria comprise
permit recipient data,
channel information data, and
data content.

11. The method according to claim 1,
wherein an error report is generated when the fail safe check is performed unsuccessfully.

12. The method according to claim 1,
wherein obligations are transmitted to the recipient along with the sensitive data if the fail safe check is performed successfully.

13. A fail safe system comprising:
(a) means for receiving a message containing sensitive data when a first check whether a request for said sensitive data is admissible has been performed successfully by means of a first set (R₁) of predetermined rules;
(b) a fail safe policy enforcement point (PEP) unit (2A) for extracting request attributes of said request;
(c) a fail safe policy decision point (PDP) unit (2B) for performing an independent fail safe check whether the received request is admissible by means of a protected second set (R₂) of predetermined rules stored in a fail safe policy access point (PAP) repository (2D) on the basis of the extracted request attributes;
(d) wherein the fail safe policy enforcement point (PEP) unit (2C) forwards said message to a recipient indicated in said request if the fail safe check is performed successfully by said fail safe policy decision point (PDP) unit (2B) .

14. The fail safe system according to claim 13,
wherein the fail safe policy enforcement point (PEP) unit (2A) forwards the extracted attributes together with the second set of rules when the two sets of rules do not comply with each other to generate an error report (ER).
